# EUROPEAN PATENT SPECIFICATION

(11) **EP 1 580 236 B1**
(45) Date of publication and mention of the grant of the patent: **01.08.2007**
(21) Application number: 05251866.9
(22) Date of filing: 24.03.2005
(51) Int. Cl.: C08L 83/04, C08K 3/08

(54) **Room temperature-curable organopolysiloxane compositions and automotive parts**
Raumtemperaturhärtbare Organopolysiloxanzusammensetzungen und Automobilteile
Compositions d'organopolysiloxane, réticulable à température ambiente et pièces détachées pour automobile

(30) Priority: 25.03.2004 JP 2004089385
(43) Date of publication of application: 28.09.2005
(73) Proprietor: Shin-Etsu Chemical Co., Ltd., Chiyoda-ku, Tokyo (JP)
(72) Inventor: Sakamoto, Takafumi, Shin-Etsu Chemical Co., Ltd., Matsuida-machi, Usui-gun Gunma-ken (JP); Kimura, Tsuneo, Shin-Etsu Chemical Co., Ltd., Matsuida-machi, Usui-gun Gunma-ken (JP)
(74) Representative: Stoner, Gerard Patrick

(56) References cited:
- EP-A- 1 295 905
- JP-A- 61 057 676
- PATENT ABSTRACTS OF JAPAN vol. 010, no. 219 (C-363), 31 July 1986 (1986-07-31) & JP 61 057676 A (JUNPEI OKAMOTO), 24 March 1986 (1986-03-24)

## Description

### TECHNICAL FIELD

This invention relates to room temperature-curable organopolysiloxane compositions having resistance to engine oil and gear oil, useful e.g. as general-purpose sealing compounds and unique sealants applicable to automotive engine parts such as oil pans, intake manifolds and lock housing parts and automotive engine surroundings. It also relates to automotive parts, including automotive engine parts and engine-surrounding parts, with which engine oil or gear oil will come in contact, the parts being sealed with the compositions in the cured state.

### BACKGROUND

RTV silicone rubbers which crosslink by moisture have many advantages including ease of handling, weather resistance and electric properties and are used in a variety of areas including sealing compounds for building components, adhesives for electric and electronic components, and seal materials for transporting vehicles.

In the automotive field posing perpetual efforts toward fuel consumption savings, engine and gear oils are improved in grade. To these oils, metal compounds e.g. of zinc, phosphorus, molybdenum and sulfur are added for stabilization or performance improvement. These metal compounds can attack the sealing compounds. There are available no sealing compounds or adhesives which exhibit durability and adhesion even in contact with such advanced engine and gear oils.

### SUMMARY OF THE INVENTION

An object of the present invention is to provide room temperature-curable organopolysiloxane compositions having improved durability and adhesion even in contact with engine and gear oils; and automotive parts, including automotive engine parts and engine-surrounding parts, with which engine oil or gear oil will come in contact, the parts being sealed with the compositions in the cured state.

Searching for sealing compounds having good durability and adhesion even in contact with engine and gear oils, the inventor has discovered that when an automotive engine part or engine surrounding is coated or sealed with a cured product of an organopolysiloxane composition having added thereto 0.1% to less than 20% by weight of a metal powder, typically copper or brass powder, which can be sulfided with sulfur and/or sulfur gas, the metal powder in the cured product is sulfided with sulfur components in the engine or gear oil so that the cured product itself is retarded from being degraded and thus drastically improved in durably adherent performance.

Notably, JP-A 2003-096301 discloses a silicone rubber composition for sealing electric and electronic parts comprising an organopolysiloxane and 0.5 to 90% by weight of a metal powder which is susceptible to sulfiding with sulfur-containing gases. Allegedly the addition of a metal powder which is susceptible to sulfiding with sulfur-containing gases is effective for preventing electric and electronic parts from being sulfided. No reference is made to the sealing of automotive engine parts or engine surroundings. Only addition curable silicone rubber compositions are described in a substantial sense.

Accordingly, the present invention provides a room temperature-curable organopolysiloxane composition for sealing an automotive engine part or engine surrounding, the composition comprising 0.1% to less than 20% by weight of a metal powder which can be sulfided with sulfur and/or sulfur gas in engine or gear oil.

The present invention also provides an automotive part with which engine or gear oil comes in contact, the part being sealed with the organopolysiloxane composition in the cured state.

When an automotive engine part and/or engine surrounding is sealed with a cured product of the inventive room temperature-curable organopolysiloxane composition (i.e., seal), the metal powder in the cured product is sulfided with sulfur components in the engine or gear oil so that the seal itself is retarded from being degraded and drastically improved in durably adherent performance. Thus the seal has excellent resistance to engine and gear oils.

### DESCRIPTION OF THE PREFERRED EMBODIMENTS

The room temperature-curable organopolysiloxane composition of the present invention comprises 0.1% to less than 20% by weight of a metal powder and cures into a silicone rubber having improved durability to engine and gear oils. The metal powder present in the silicone rubber is sulfided with sulfur components in the engine or gear oil and is thus effective for retarding the silicone rubber itself from being degraded. Examples of suitable metals include silver, copper, iron, brass, nickel, aluminum, tin, and zinc, and alloys comprising any of the foregoing. Of these, copper and brass are preferred because of the stability of metal particles in the composition and the low cost.

Any desired technique may be used in making such a metal powder. The metal powder should have a particle size which does not compromise its dispersion in and the outer appearance of sealing compound. The preferred average particle size of the metal powder is up to 200 µm, and more preferably up to 100 µm. The lower limit of average particle size is preferably at least 0.01 µm, and more preferably at least 0.1 µm. It is noted that the average particle size is determined as a weight average value or median diameter using a particle size distribution analyzer by the laser diffraction method.

The metal powder should be added in an effective amount for preventing or retarding the silicone rubber from being degraded in engine or gear oil. Since excessive addition amounts are economically disadvantageous, the metal powder should be added in an amount of 0.1% to less than 20% by weight, preferably 0.5% to 18% by weight, and more preferably 1% to 15% by weight, based on the total weight of the organopolysiloxane composition.

The room temperature-curable organopolysiloxane composition of the present invention comprises a specific amount of a metal powder and an organopolysiloxane as a main component or base polymer and cures into silicone rubber when held at room temperature. The room temperature-curable organopolysiloxane composition comprises the following components (A) to (D):
(A) one or more organopolysiloxane selected from the group consisting of an organopolysiloxane having the general formula (1): 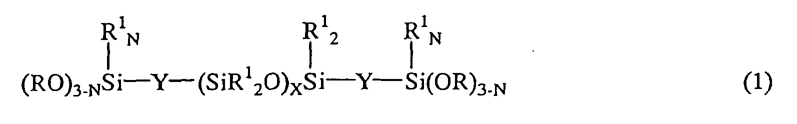 wherein R is methyl or ethyl, R¹ is a substituted or unsubstituted monovalent hydrocarbon radical of 1 to 12 carbon atoms, X is an integer of at least 10, Y is an oxygen atom or an alkylene radical of 1 to 5 carbon atoms, and N is independently an integer of 0 or 1; an organopolysiloxane having the general formula (2): 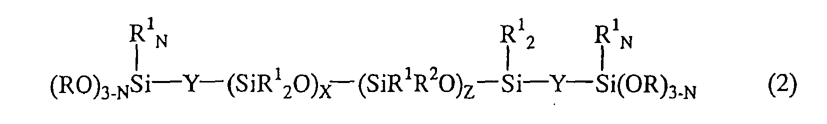 wherein R, R¹, X, Y and N are as defined above, R² is a branch chain containing a hydrolyzable radical represented by the general formula (3): 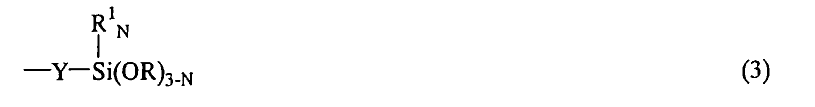 wherein R, R¹, Y and N are as defined above, and Z is an integer of 1 to 10; and an organopolysiloxane having the average compositional formula (4):

   R¹ₐSiO_{(4-a)/2} (4)

   wherein R¹ is as defined above, and "a" is a number of 1.90 to 2.05,
(B) an inorganic filler,
(C) a silane compound having on the average at least two hydrolyzable radicals each attached to a silicon atom per molecule and/or a partial hydrolyzate thereof, and
(D) the above-described metal powder.

Component (A) is an organopolysiloxane serving as the base polymer which is one or more selected from organopolysiloxanes having the general formulae (1), (2) and (4). 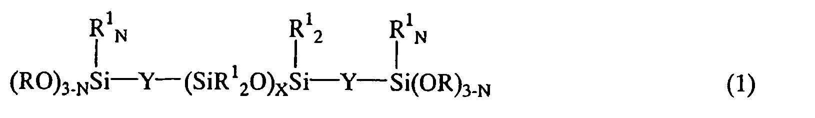 Herein R is methyl or ethyl, R¹ is a substituted or unsubstituted monovalent hydrocarbon radical of 1 to 12 carbon atoms, X is an integer of at least 10, Y is an oxygen atom or an alkylene radical of 1 to 5 carbon atoms, and N is independently an integer of 0 or 1. 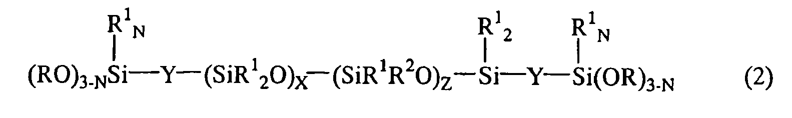 Herein R, R¹, X, Y and N are as defined above, R² is a branch chain containing a hydrolyzable radical represented by the general formula (3): 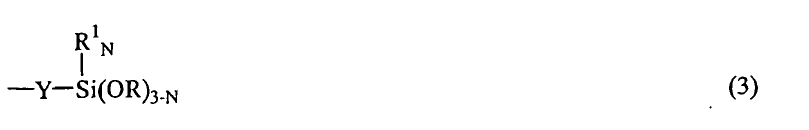 wherein R, R¹, Y and N are as defined above, and Z is an integer of 1 to 10.

R¹ₐSiO_{(4-a)/2} (4)

Herein R¹ is as defined above, and "a" is a number of 1.90 to 2.05, and preferably 1.95 to 2.04.

R¹ which may be the same or different is a substituted or unsubstituted monovalent hydrocarbon radical of 1 to 12 carbon atoms, especially 1 to 10 carbon atoms. Examples include alkyl radicals such as methyl, ethyl, propyl, butyl, 2-ethylbutyl, and octyl, cycloalkyl radicals such as cyclohexyl and cyclopentyl, alkenyl radicals such as vinyl, hexenyl and allyl, aryl radicals such as phenyl, tolyl, xylyl, naphthyl and diphenyl, aralkyl radicals such as benzyl and phenylethyl, and substituted forms of the foregoing in which some or all of the hydrogen atoms attached to carbon atoms are replaced by halogen atoms, cyano groups or the like, such as chloromethyl, trifluoropropyl, 2-cyanoethyl and 3-cyanopropyl. Of these, methyl, vinyl, phenyl and trifluoropropyl radicals are preferred.

Y is an oxygen atom or an alkylene radical of 1 to 5 carbon atoms. Illustrative of alkylene radicals are methylene, ethylene, propylene and butylene, with ethylene being preferred.

The subscript X is an integer of at least 10, preferably 100 to 2,000, and more preferably 300 to 1,500; Z is an integer of 1 to 10, preferably 1 to 8; and "a" is a number of 1.90 to 2.05, and preferably 1.95 to 2.04.

The organopolysiloxane as component (A) should preferably have a viscosity of 100 to 1,000,000 mPa·s at 25°C. A viscosity of less than 100 mPa·s may fail to impart satisfactory physical properties, especially flexibility and high elongation, to the elastomer after curing. A viscosity of more than 1,000,000 mPa·s may lead to a composition which has too high a viscosity and is inefficient to apply. The preferred viscosity is in the range of 5,000 to 100,000 mPa·s. It is noted that the viscosity is measured by a rotary viscometer.

Component (B) is an inorganic filler. Exemplary fillers include fumed silica, precipitated silica, quartz flour, diatomaceous earth, metal oxides such as iron oxide, zinc oxide, titanium oxide, aluminum oxide, metal nitrides such as boron nitride, aluminum nitride, metal carbonates such as calcium carbonate, magnesium carbonate and zinc carbonate, asbestos, glass wool, carbon black, fine mica, fused silica powder, and powdered synthetic resins such as polystyrene, polyvinyl chloride, and polypropylene. These fillers may be used alone or in admixture. The surface of the filler may be untreated or have been treated with silane coupling agents, organopolysiloxanes, fatty acids or the like.

An appropriate amount of the inorganic filler added is in the range of 0 to 400 parts by weight per 100 parts by weight of component (A). More than 400 parts of the filler may detract from mechanical properties. The preferred amount is in a range of 10 to 300 parts by weight.

Component (C) is a silane compound having on the average at least two hydrolyzable radicals each attached to a silicon atom per molecule and/or a partial hydrolyzate thereof. Preference is given to a silane compound having at least two hydrolyzable radicals per molecule or a siloxane compound which is a partial hydrolyzate of the silane compound.

Preferred are silane compounds having the general formula:

R²_{b}SiR³_{(4-b)}

wherein R² is a monovalent hydrocarbon radical, R³ is a hydrolyzable radical, and b is 0, 1 or 2, preferably 0 or 1, most preferably 1.

The hydrolyzable radicals R³ on the silane compounds and their partial hydrolyzates are not particularly limited as long as they are hydrolyzable. Suitable hydrolyzable radicals include ketoxime radicals such as methylethylketoxime and dimethylketoxime, acetoxy, alkoxy radicals such as methoxy and ethoxy, and alkenyloxy radicals such as isopropenoxy.

The remaining silicon atom-bonded radicals R² other than the hydrolyzable radical are not particularly limited as long as they are monovalent hydrocarbon radicals. Illustrative are monovalent hydrocarbon radicals of 1 to 10 carbon atoms, including alkyl radicals such as methyl, ethyl and propyl, alkenyl radicals such as vinyl, and aryl radicals such as phenyl. Of these, methyl, ethyl, vinyl and phenyl are preferred.

Illustrative examples of component (C) include ketoximesilanes such as tetrakis(methylethylketoxime)silane,
methyltris(dimethylketoxime)silane,
methyltris(methylethylketoxime)silane,
ethyltris(methylethylketoxime)silane,
methyltris(methylisobutylketoxime)silane, and
vinyltris(methylethylketoxime)silane;
alkoxysilanes such as dimethyldimethoxysilane,
methyltrimethoxysilane, vinyltrimethoxysilane,
phenyltrimethoxysilane, tetramethoxysilane,
vinyltriethoxysilane and tetraethoxysilane;
acetoxysilanes such as methyltriacetoxysilane and vinyltriacetoxysilane; and
isopropenoxysilanes such as methyltriisopropenoxysilane, vinyltriisopropenoxysilane and phenyltriisopropenoxysilane. Partial hydrolytic condensates of the foregoing silanes are also included. They may be used alone or in admixture of two or more.

An appropriate amount of component (C) added is in the range of 0.5 to 30 parts by weight per 100 parts by weight of component (A). Less than 0.5 part of component (C) may fail to achieve sufficient crosslinkage or to formulate a composition having desired rubber elasticity. More than 30 parts of component (C) may detract from mechanical properties. The preferred amount is in a range of 1 to 15 parts by weight.

Curing catalysts are often used in the room temperature-curable organopolysiloxane compositions of the invention. Illustrative of the curing catalysts are alkyl tin esters such as dibutyltin diacetate, dibutyltin dilaurate and dibutyltin dioctoate; titanates and titanium chelate compounds such as tetraisopropoxytitanium, tetra-n-butoxytitanium, tetrakis(2-ethylhexoxy)titanium, dipropoxybis(acetylacetonato)titanium, and titanium isopropoxyoctylene glycol; organometallic compounds such as zinc naphthenate, zinc stearate, zinc 2-ethyloctoate, iron 2-ethylhexoate, cobalt 2-ethylhexoate, manganese 2-ethylhexoate, cobalt naphthenate, and alkoxy aluminum compounds; aminoalkyl-substituted alkoxysilanes such as 3-aminopropyltriethoxysilane and N-β-(aminoethyl)-γ-aminopropyltrimethoxysilane; amines and salts thereof such as hexylamine and dodecylamine phosphate; quaternary ammonium salts such as benzyltriethylammonium acetate; alkali metal salts of lower fatty acids such as potassium acetate, sodium acetate and lithium oxalate; dialkylhydroxylamines such as dimethylhydroxylamine and diethylhydroxylamine; and guanidyl-containing silanes or siloxanes such as tetramethylguanidylpropyltrimethoxysilane, tetramethylguanidylpropylmethyldimethoxysilane, and tetramethylguanidylpropyltris(trimethylsiloxy)silane. These catalysts may be used alone or in admixture of two or more. The curing catalyst is typically used in amounts of 0 to 10 parts by weight, preferably 0.01 to 5 parts by weight per 100 parts by weight of the organopolysiloxane (A).

In the room temperature-curable organopolysiloxane compositions of the invention, various additives may be compounded. Well-known additives, for example, pigments, dyes, antioxidants, antidegradants, antistatic agents, and flame retardants such as antimony oxide and chlorinated paraffin are useful.

Thixotropic agents such as polyethers, mildew-proof agents, antibacterial agents, and adhesion promoters may also be compounded. Preferred adhesion promoters include aminosilanes such as γ-aminopropyltriethoxysilane and [3-(2-aminoethyl)aminopropyl]trimethoxysilane, epoxysilanes such as γ-glycidoxypropyltrimethoxysilane and β-(3,4-epoxycyclohexyl)ethyltrimethoxysilane, and isocyanate silanes. The adhesion promoter is preferably used in an amount of 0.1 to 20 parts, especially 0.2 to 10 parts by weight per 100 parts by weight of the organopolysiloxane (A).

The organopolysiloxane composition having a specific amount of metal powder incorporated therein according to the invention may be prepared by combining predetermined amounts of the above-described components and optional additives, and intimately mixing them in a dry atmosphere. The composition cures when it is allowed to stand at room temperature. The molding method and curing conditions may be selected from well-known methods and conditions depending on the particular type of the composition.

The organopolysiloxane composition of the invention is used in the cured state as a sealant to automotive engine parts such as oil pans, intake manifolds and lock housing parts and/or automotive engine surroundings. On such use, it exhibits excellent resistance to engine oil and gear oil and a significant improvement in durably adherent performance.

### EXAMPLE

Examples of the invention are given below by way of illustration and not by way of limitation. Note that all parts are by weight, and the viscosity is a measurement at 25°C by a rotary viscometer.

### Synthesis Example 1

A 3-liter three-necked flask equipped with a thermometer, stirrer and condenser was charged with 2,500 g of α,ω-dimethylvinyl-dimethylpolysiloxane having a viscosity of 30,000 mPa·s, 400 g of toluene, 11.9 g of trimethoxysilane, and 1.0 g of a 50% toluene solution of chloroplatinic acid as a catalyst. In a N₂ stream, the contents were mixed at room temperature for 9 hours. Thereafter, the flask was heated at 100°C under a vacuum of 10 mmHg for distilling off the toluene diluent and the excess trimethoxysilane, yielding 2,350 g of a colorless clear liquid having a viscosity of 40,000 mPa·s and a nonvolatile content of 99.9% by weight. The liquid was combined with tetrapropyl titanate in a weight ratio of 100:1. It did not undergo an immediate viscosity buildup, but cured within one day. This indicated that methyltrimethoxysilane added to the vinyl radicals at the polymer ends. This polymer is designated Polymer A.

### Example 1

A composition was prepared by intimately mixing 60 parts of Polymer A and 40 parts of light calcium carbonate surface treated with fatty acid (Hakuenka CCR by Shiraishi Industry Co., Ltd.), adding thereto 3 parts of vinyltrimethoxysilane, 2 parts of a titanium chelate catalyst Orgatix TC-750 (trade name, by Matsumoto Trading Co., Ltd.), 1 part of γ-aminopropyltriethoxysilane, and 7.5% by weight, based on the entire composition, of copper powder 1100Y having an average particle size of 1.0 µm (trade name, by Mitsui Mining and Smelting Co., Ltd.) as the metal powder, and mixing the contents in a moisture-proof vessel until uniform.

### Example 2

A composition was prepared as in Example 1 aside from using surface treated copper powder FCC-SP-99 (Fukuda Metal Foil Co., Ltd.) instead of the copper powder 1100Y.

### Example 3

A composition was prepared as in Example 1 aside from changing the amount of the copper powder 1100Y to 1% by weight.

### Example 4

A composition was prepared by intimately mixing 60 parts of dimethylpolysiloxane capped with hydroxyl radicals at both ends of the molecular chain and having a viscosity of 20,000 mPa·s, 5 parts of fumed silica surface treated with dimethyldichlorosilane, and 35 parts of light calcium carbonate surface treated with fatty acid (Hakuenka CCR by Shiraishi Industry Co., Ltd.), adding thereto 4 parts of vinyltributanoximesilane, 0.1 part of dibutyltin dioctate, 1 part of γ-aminopropyltriethoxysilane, and 5% by weight, based on the entire composition, of copper powder 1100Y having an average particle size of 1.0 µm (trade name, by Mitsui Mining and Smelting Co., Ltd.) as the metal powder, and mixing the contents in a moisture-proof vessel until uniform.

### Example 5

A composition was prepared by intimately mixing 60 parts of dimethylpolysiloxane capped with hydroxyl radicals at both ends of the molecular chain and having a viscosity of 20,000 mPa·s, 5 parts of fumed silica surface treated with dimethyldichlorosilane, and 35 parts of heavy calcium carbonate surface treated with paraffin (MC Coat P-20 by Maruo Calcium Co., Ltd.), adding thereto 4 parts of vinyltri(isopropenyloxy)silane, 1 part of γ-aminopropyltriethoxysilane, 1 part of 1,1,3,3-tetramethyl-2-[3-(trimethoxysilyl)propyl]guanidine, and 5% by weight, based on the entire composition, of copper powder 1100Y having an average particle size of 1.0 µm (trade name, by Mitsui Mining and Smelting Co., Ltd.) as the metal powder, and mixing the contents in a moisture-proof vessel until uniform.

### Comparative Example 1

A composition was prepared as in Example 1 except that the copper powder 1100Y was omitted.

### Comparative Example 2

A composition was prepared as in Example 1 aside from changing the amount of the copper powder 1100Y to 0.05% by weight.

The compositions obtained in Examples 1 to 5 and Comparative Examples 1 to 2 were examined for initial physical properties and oil resistance by the following tests. The results are shown in Table 1.

### Initial physical property test

An amount of the composition was molded into a sheet of 2 mm thick and allowed to cure over one week in an atmosphere of 23±2°C and 50±5% RH. The physical properties (hardness, elongation at break, tensile strength) of the rubber sheet were measured according to JIS K-6249.

In an adhesion test, an amount of the composition was applied to an iron plate so as to form a coat having a bond area of 25x10 mm and a thickness of 1 mm and cured under the same conditions as above, obtaining a test piece. A bond strength was measured by pulling the test piece in a shear direction according to JIS K-6850.

### Oil resistance test

The rubber sheet prepared for the physical property test and the test piece prepared for the adhesion test were placed in a 300-ml pressure vessel. The vessel was filled with Mitsubishi genuine engine oil SL-20 until the samples were fully submerged. The vessel was held in a dryer at 150°C for 100 hours. Thereafter, the samples were taken out and examined as in the initial physical property test.

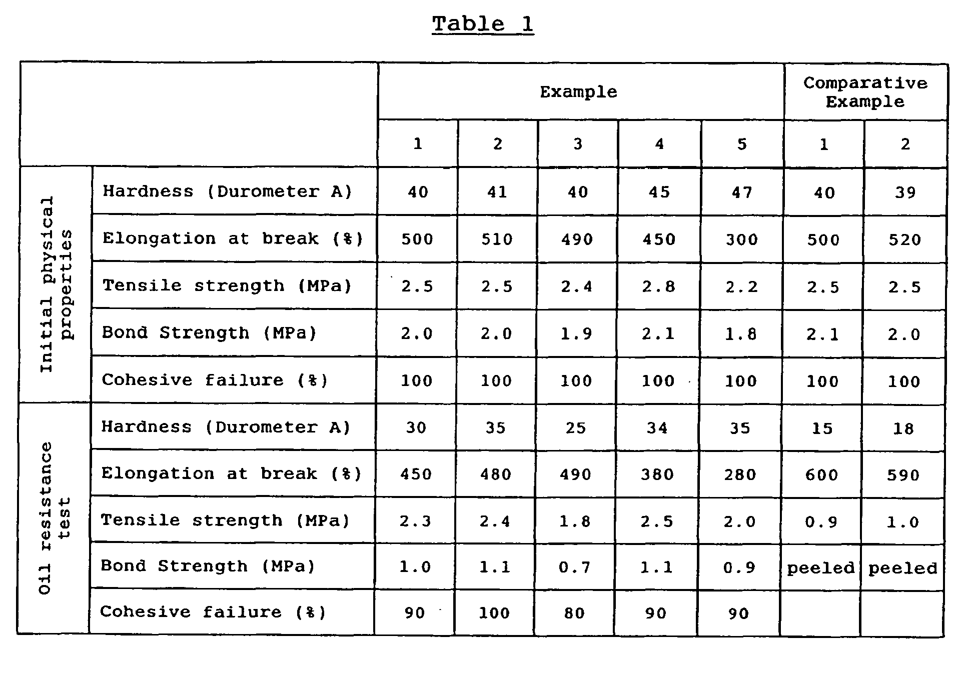

## Claims

1. A room temperature-curable organopolysiloxane composition for sealing an automotive engine part or engine surrounding,
said composition comprising:
(A) 100 parts by weight of at least one organopolysiloxane selected from the group consisting of an organopolysiloxane having the general formula (1): 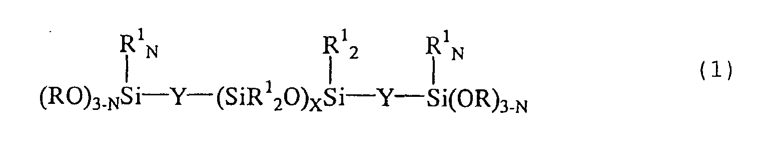 wherein R is methyl or ethyl, R¹ is a substituted or unsubstituted monovalent hydrocarbon radical of 1 to 12 carbon atoms, X is an integer of at least 10, Y is an oxygen atom or an alkylene radical of 1 to 5 carbon atoms, and N is independently an integer of 0 or 1; an organopolysiloxane having the general formula (2): 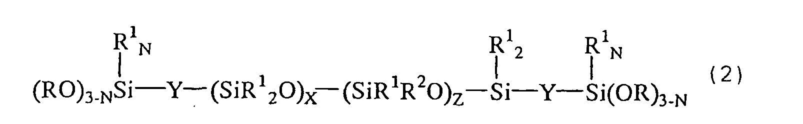 wherein R, R¹, X, Y and N are as defined above, R² is a branch chain containing a hydrolyzable radical represented by the general formula (3): 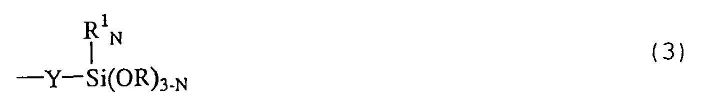 wherein R, R¹, Y and N are as defined above, and Z is an integer of 1 to 10; and an organopolysiloxane having the average compositional formula (4):
R¹ₐSiO_{(4-b)/2} (4)
wherein R¹ is as defined above, and "a" is a number of 1.90 to 2.05,
(B) 0 to 400 parts by weight of an inorganic filler,
(C) 0.5 to 30 parts by weight of a silane compound having on the average at least two hydrolyzable radicals each attached to a silicon atom per molecule and/or a partial hydrolyzate thereof, and
(D) 0.1% to less than 20% by weight based on the entire composition of a metal powder which can be sulfided with sulfur and/or sulfur gas.

2. The composition of claim 1, wherein said metal powder is copper powder and/or brass powder.

3. The composition of claim 1 or claim 2 wherein the metal powder sis included in an amount of 1% to 15% by weight based on the total weight of the composition.

4. The composition of any one of claims 1 to 3 wherein R¹ is a methyl, vinyl, phenyl or trifluoropropyl radical, Y is an ethylene radical, "a" is 1.95 to 2.04, X is 300 to 1500 and Z is 1 to 8.

5. The composition of any one of claims 1 to 4 wherein the inorganic filler (8) is included in an amount of 10 to 300 parts by weight.

6. The composition of any one of claims 1 to 5 wherein the silane compound (C) has the general formula
R²_{b}SiR³_{(4-b)}
wherein R² is a monovalent hydrocarbon radical, R³ is a hydrolyzable radical and b is 0, 1 or 2.

7. An automotive part with which engine or gear oil comes in contact, the party being sealed with the room temperature-curable organopolysiloxane composition of any one of claims 1 to 6 in the cured state.

8. Use, as or as a sealant for an automotive component which in use is contacted by oil, of a composition according to any one of claims 1 to 6.

## Patentansprüche

1. Bei Raumtemperatur härtbare Organopolysiloxanzusammensetzung zum Abdichten eines Kraftfahrzeug-Motorteils oder -Motorumfelds,
wobei die Zusammensetzung Folgendes umfasst:
(A) 100 Gewichtsteile zumindest eines Organopolysiloxans, ausgewählt aus der aus Folgendem bestehenden Gruppe: einem Organopolysiloxan der allgemeinen Formel (1): 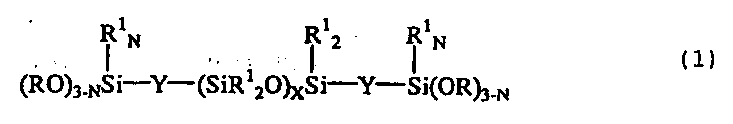 worin R Methyl oder Ethyl ist, R¹ ein substituierter oder unsubstituierter einwertiger Kohlenwasserstoffrest mit 1 bis 12 Kohlenstoffatomen ist, X eine ganze Zahl von zumindest 10 ist, Y ein Sauerstoffatom oder ein Alkylenrest mit 1 bis 5 Kohlenstoffatomen ist und N unabhängig eine ganze Zahl von 0 oder 1 ist; einem Organopolysiloxan der allgemeinen Formel (2): 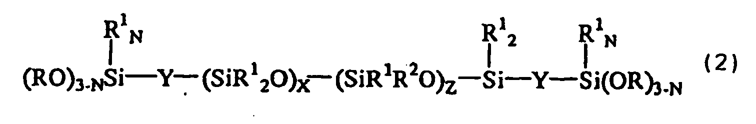 worin R, R¹, X, Y und N wie oben definiert sind, R² eine verzweigte Kette ist, die einen durch die allgemeine Formel (3) dargestellten hydrolysierbaren Rest enthält: 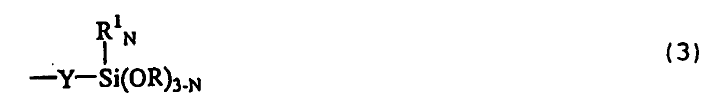 worin R, R¹, Y und N wie oben definiert sind, und Z eine ganze Zahl von 1 bis 10 ist; und einem Organopolysiloxan der mittleren Zusammensetzungsformel (4):
R¹ₐSiO_{(4-a)/2} (4)
worin R¹ wie oben definiert ist und "a" eine Zahl von 1,90 bis 2,05 ist,
(B) 0 bis 400 Gewichtsteile eines anorganischen Füllstoffs,
(C) 0,5 bis 30 Gewichtsteile einer Silanverbindung mit durchschnittlich zumindest zwei an ein Siliciumatom gebundenen hydrolysierbaren Resten pro Molekül und/oder eines partiellen Hydrolysats davon und
(D) 0,1 bis weniger als 20 Gew.-%, bezogen auf die gesamte Zusammensetzung, eines Metallpulvers, das gegebenenfalls mit Schwefel und/oder Schwefelgas sulfidiert sein kann.

2. Zusammensetzung nach Anspruch 1, worin das Metallpulver Kupferpulver und/oder Messingpulver ist.

3. Zusammensetzung nach Anspruch 1 oder Anspruch 2, worin das Metallpulver in einer Menge von 1 bis 15 Gew.-%, bezogen auf das Gesamtgewicht der Zusammensetzung, enthalten ist.

4. Zusammensetzung nach einem der Ansprüche 1 bis 3, worin R¹ ein Methyl-, Vinyl-, Phenyl- oder Trifluorpropylrest ist, Y ein Ethylenrest ist, "a" = 1,95 bis 2,04 ist, X = 300 bis 1.500 ist und Z = 1 bis 8 ist.

5. Zusammensetzung nach einem der Ansprüche 1 bis 4, worin der anorganische Füllstoff (8) in einer Menge von 10 bis 300 Gewichtsteilen enthalten ist.

6. Zusammensetzung nach einem der Ansprüche 1 bis 5, worin die Silanverbindung (C) die allgemeine Formel
R²_{b}SiR³_{(4-b)}
aufweist, worin R² ein einwertiger Kohlenwasserstoffrest ist, R³ ein hydrolysierbarer Rest ist und b = 0, 1 oder 2 ist.

7. Kraftfahrzeugteil, mit dem Motor- oder Getriebeöl in Kontakt kommt, wobei die Teile mit einer bei Raumtemperatur härtbaren Organopolysiloxan-Zusammensetzung nach einem der Ansprüche 1 bis 6 im gehärteten Zustand abgedichtet sind.

8. Verwendung einer Zusammensetzung nach einem der Ansprüche 1 bis 6 als Dichtungsmittel für eine Kraftfahrzeug-Komponente, die mit Öl in Kontakt kommt.

## Revendications

1. Composition d'organopolysiloxane durcissable à température ambiante pour sceller une pièce de moteur d'automobile ou un moteur environnant,
ladite composition comprenant:
(A) 100 parties en poids d'au moins un organopolysiloxane sélectionné dans le groupe consistant en un organopolysiloxane ayant la formule générale (1) : 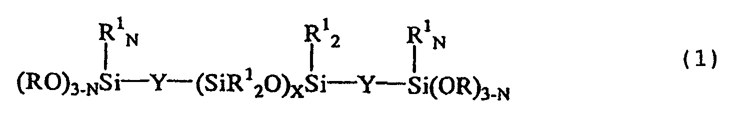 où R est méthyle ou éthyle, R¹ est un radical hydrocarbure monovalent substitué ou non substitué de 1 à 12 atomes de carbone, X est un entier d'au moins 10, Y est un atome d'oxygène ou un radical alkylène de 1 à 5 atomes de carbone, et N est indépendamment un entier de 0 ou 1; et un organopolysiloxane ayant la formule générale (2): 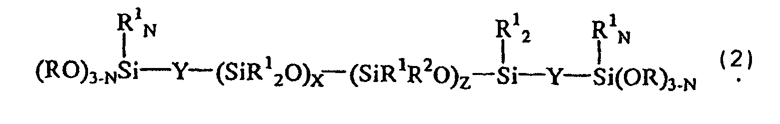 où R, R¹, X, Y et N sont tels que définis ci-dessus, R² est une chaîne ramifiée contenant un radical hydrolysable représenté par la formule générale (3): 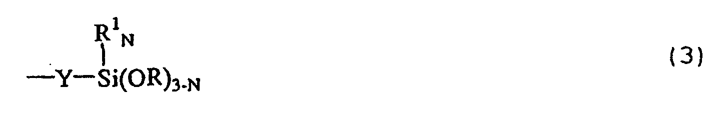 où R, R¹, Y et N sont tels que définis ci-dessus, et Z est un entier de 1 à 10; et un organopolysiloxane ayant la formule de composition moyenne (4):
R¹ₐSiO_{(4-a)/2} (4)
où R¹ est tel que défini ci-dessus, et "a" est un nombre de 1,90 à 2,05,
(B) 0 à 400 parties en poids d'une charge inorganique,
(C) 0,5 à 30 parties en poids d'un composé de silane ayant en moyenne au moins deux radicaux hydrolysables chacun attaché à un atome de silicium par molécule et/ou son hydrolysat partiel, et
(D) 0,1% à moins de 20% en poids en se basant sur toute la composition d'une poudre de métal qui peut être sulfurée avec du soufre et/ou un gaz de soufre.

2. Composition de la revendication 1, où ladite poudre de métal est de la poudre de cuivre et/ou de la poudre de laiton.

3. Composition de la revendication 1 ou de la revendication 2 où la poudre de métal est incorporée en une quantité de 1% à 15% en poids en se basant sur le poids total de la composition.

4. Composition de l'une quelconque des revendications 1 à 3 où R¹ est un radical méthyle, vinyle, phényle ou trifluoropropyle, Y est un radical éthylène, "a" est 1,95 à 2,04, X est 300 à 1500 et Z est 1 à 8.

5. Composition de l'une quelconque des revendications 1 à 4 où la charge inorganique (8) est incorporée en une quantité de 10 à 300 parties en poids.

6. Composition de l'une quelconque des revendications 1 à 5 où le composé de silane (C) a la formule générale
R²_{b}SiR³_{(4-b)}
où R² est un radical hydrocarbure monovalent, R³ est un radical hydrolysable et b est 0, 1 ou 2.

7. Pièce d'automobile avec laquelle l'huile du moteur ou d'engrenage vient en contact, la pièce étant scellée avec la composition d'organopolysiloxane durcissable à température ambiante de l'une quelconque des revendications 1 à 6 à l'état durci.

8. Utilisation en tant qu'agent d'étanchéité pour un composant d'automobile qui en utilisation est contacté par de l'huile, d'une composition selon l'une quelconque des revendications 1 à 6.
